# EUROPÄISCHE PATENTSCHRIFT

(11) **EP 0 698 360 B1**
(45) Veröffentlichungstag und Bekanntmachung des Hinweises auf die Patenterteilung: **22.03.2000**
(21) Anmeldenummer: 95890143.1
(22) Anmeldetag: 01.08.1995
(51) Int. Cl.: A47C 7/46, B60N 2/44

(54) **Anatomisch formbare Stütze, insbesondere Lordosenstütze**
Adjustable anatomical support, particularly lumbar support
Support réglable anatomique, notamment support lombaire

(30) Priorität: 10.08.1994 AT 156194
(43) Veröffentlichungstag der Anmeldung: 28.02.1996
(73) Patentinhaber: Schukra Berndorf Ges.m.b.H., 2560 Berndorf (AT)
(72) Erfinder:
(74) Vertreter: Widtmann, Georg, Dipl.-Ing. Dr. techn.

(56) Entgegenhaltungen:
- EP-A- 0 434 660
- WO-A-93/25404
- US-A- 5 217 278
- US-A- 5 299 851

## Beschreibung

Die Erfindung hat eine anatomisch formbare Stütze, insbesondere Lordosenstütze, für Liege- und/oder Sitzmöbel zum Gegenstand.

Sitze und Liegen haben die Aufgabe, den Körper des Benützers zu stützen und möglichst Muskelanspannungen zu vermeiden. Von besonderer Bedeutung ist hiebei die Stützung der Wirbelsäule, sei es im Liegen oder Sitzen. Die Wirbelsäule weist, wie bekannt, keinen geradlinigen Verlauf auf, sondern ist geschwungen, und es bedarf gerade im Bereich der Lordosen einer besonderen Stützung. Bei Sitzen in Verkehrsmitteln, insbesondere Kraftfahrzeugen, wird ein besonders hoher Anspruch gestellt, da bei Verkehrsmitteln in der Regel zwangsweise ein Verweilen am Sitz über längere Zeit stattfindet und Entlastungen der Wirbelsäule bzw. der Muskeln durch Bewegen des Körpers nicht jederzeit möglich ist. Weiters tritt eine Wechselwirkung des Sitzes mit dem Körper des Benützers unter Einwirkung von größeren Kräften bei starker Beschleunigung bzw. Verzögerung ein, so daß besonders für Fahrzeugsitze eine hohe Anzahl von konstruktiven Lösungen für Lordosenstützen bekannt geworden sind.

Aus der US-A-2,756.809 wird eine Stützlehne für Sesseln, Autositze od. dgl. bekannt, bei welcher aus einer rechteckigen Platte aus flexiblem Material, die in etwa die Größe der gesamten Sitzlehne entspricht, eine anatomisch anpaßbare Stützlehne gebildet. Die Metallplatte ist sowohl im oberen als auch im unteren Bereich schwenkbar gelagert, wobei zwischen diesen beiden Lagerungsstellen etwa im Schulter- und Gürtelbereich des Benützers einstellbare Distanzstücke vorgesehen sind. Diese Distanzstücke können sowohl der Höhe nach, also beispielsweise je nach Tiefe der Krümmung der Wirbelsäule als auch in Längserstreckung der Lehne, jeweils über eigene Spindeltriebe eingestellt werden. Bei einer derartigen Stützlehne ist es erforderlich, daß zumindest vier verschiedene Spindeltriebe betätigt werden, um die anatomische Anpassung der Stütze zu erreichen. Die Krümmung der Stützlehne ist symmetrisch ausgebildet und trägt nicht der natürlichen Form der Körperkrümmungen Rechnung.

In der AT-B-358.767 wird eine biegsame elastische Stütze beschrieben, die eine Änderung der Höhe als auch des Ortes des Maximums einer Lordosenstütze erlaubt. Dieselbe weist sowohl Zug- als auch Stützelemente auf, die parallel zueinander angeordnet sind, wobei zwischen diesen beiden ortsveränderliche Abstandhalter vorgesehen sind, über welche die exakte Lage des Maximums der Unterstützung festlegbar ist. Eine derartige Vorrichtung erlaubt zwar einen besonders hohen Komfort bei der Benützung, weist jedoch einen komplexen Aufbau auf, welcher dem aus gesundheitlichen Gründen erwünschten breiten Einsatz entgegensteht.

In der WO 93 25 404 wird eine Lordosenstütze beschrieben, die zusätzlich zur elastischen Lordosenstütze zwei Stahlfederelemente aufweist. Diese beiden Federelemente, jeweils in den äußeren Bereichen angeordnet, sind über Querverbinder miteinander verbunden, an welchen ein Bowdenzug angreift. Es liegt somit ein Gerüst vor, das zwei Querverbinder und zwei Federelemente aufweist, die nach Bedarf verformt werden können, wobei eine Abdeckung durch eine flexible Platte und Polstermaterial erfolgt. Die Federelemente liegen jeweils an den beiden Randbereichen der Platte, so daß die Endbereiche der Platte verstärkt sind.

In der EP-A-0 434 660, von welchem Stand der Technik die vorliegende Erfindung ausgeht, wird eine anatomisch formbare Stütze beschrieben. Diese Lordosenstütze weist einen in etwa rechteckigen Grundkörper aus faserverstärktem Kunststoff auf, welcher von oben nach unten, also in Bewegungsrichtng, in seiner Wandstärke, insbesondere stufenförmig, abnimmt. Durch diese abnehmende Wandstärke kann mit Zueinanderbewegen der beiden Endbereiche, u. zw. oben und unten, eine willkürliche asymmetrische Krümmung erreicht werden, womit eine Anpassung an die anatomische Ausbildung von Lordosen besonders vorteilhaft erreicht werden kann. Diese Lordosenstütze weist weiters Durchbrechungen auf, so daß durch diese Lordosenstütze keine absolute Wasserdampfsperre gegeben ist.

Der vorliegenden Erfindung ist zum Ziel gesetzt, eine anatomisch formbare Stütze zu schaffen, die nicht nur in eine Richtung, also beispielsweise in Körperlängsrichtung des Benützers, eine entsprechende Stütze des Körpers erlaubt, sondern auch quer hiczu den unterschiedlichen Anforderungen Rechnung tragen kann. Weiters soll die anatomisch formbare Stütze im wesentlichen dieselbe Wärmeleitfähigkeit wie das sie umgebende Material aufweisen können, und es soll bei möglichst geringem Gesamtgewicht eine Rückstellung der anatomischen Stütze auch nach einer hohen Anzahl von Lastwechseln gewährleistet sein.

Ein weiteres Ziel ist, einen Aufbau mit einer besonders geringen Anzahl von Teilen zu erreichen. Weiters soll die Stütze nur eine geringe Dicke aufweisen, um z. B. die Rückenlehne besonders raumsparend, also dünn, zu gestalten.

Die erfindungsgemäße anatomisch formbare Stütze, insbesondere Lordosenstütze, für Liege- und/oder Sitzmöbel, mit zumindest einer Platte, welche mit einem elastisch verformbaren Material, insbesondere Kunststoff, aufgebaut ist, welche weiters durch Zueinanderbewegen zumindest zweier Bereiche der Platte, insbesondere Endbereiche, mit einstellbarer, gegebenenfalls unterstützungsloser, Scheitelhöhe krümmbar ausgebildet ist, und die Platte in Richtung der beiden zueinander bewegbaren Bereiche mit variierender Wandstärke ausgebildet ist, besteht im wesentlichen darin, daß die Wandstärke der Platte zusätzlich quer zur Bewegungsrichtung der beiden zueinander bewegbaren Bereiche in ihrer Dicke variiert und daß zumindest ein, insbesondere zwei, Federelement(e) an der Platte vorgesehen ist, welche(s) beim Zueinanderbewegen der Bereiche gespannt werden wird, wobei die Platte einen Grundkörper aufweist, von welchem, insbesondere beidseitig, quer zur Bewegungsrichtung der zueinander bewegbaren Bereiche Fortsätze abragen. Durch Ausbildung der anatomisch formbaren Stütze als Platte besteht die Möglichkeit, Druckspitzen gegenüber dem Körper des Benützers zu vermeiden, selbst wenn keine exakte Positionierung des Körpers, beispielsweise des Rückens auf der Stütze erfolgt. Durchbrechungen in der Platte, wodurch beispielsweise eine Art gitterförmiger Aufbau erreicht wird, bewirken ebenfalls keine entsprechenden Druckmaxima. Durch den Aufbau der Platte mit einem elastischen Material wird nicht nur die Möglichkeit zur Ausbildung einer erwünschten Krümmung der Stütze erreicht, sondern es besteht auch die Möglichkeit, daß bei Belastung des Materials eine zusätzliche Anpassung an die anatomischen Formen, wenn auch nur im geringeren Maße, eintritt. Durch ein Zueinanderbewegen von Bereichen, insbesondere Endbereichen, der Platte, kann eine besonders starke Wölbung der Platte erreicht werden. Durch Federlemente an der Platte kann dieselbe in ihrer Dicke besonders gering gehalten werden, so daß mit Änderung der Wandstärke quer zur Bewegungsrichtung der zueinander zu bewegenden Bereiche ebenfalls eine besonders gute Anpassung an eine anatomische Form möglich ist, wobei eine Rückstellung der anatomischen Stütze in die Ruhestellung durch die Federlemente auch nach einer hohen Anzahl von Lastwechseln gewährleistet ist. Weiters ist der Vorteil gegeben, daß die Stütze, falls erwünscht, in eine ebene Ausgangslage oder auch zu einer Gegenkrümmung bewegt werden kann. Die Federelemente können bei geeigneter Materialwahl auch als elektrische Heiz- und Kühlelemente dienen. Durch das Vorsehen von Fortsätzen, die quer zur Bewegungsrichtung von der Platte mit einem Grundkörper abragen, kann die Flexibilität quer zur Bewegungsrichtung der Platte besonders hoch gehalten werden, wobei weiters den unterschiedlichen anatomischen Bereichen, wie Rippen-, Nieren- und Lendenbereich, besonders einfach besonders Rechnung getragen werden kann.

Ist das zumindest eine Federelemente mit Materialstärkungen der Platte gebildet, die in Bewegungsrichtung der beiden zueinander bewegbaren Bereiche, insbesondere parallel hiezu, verlaufen, so ist keine zusätzliche Montage von Federelementen bei der Fertigung erforderlich, wobei die gesamte Materialstärke der Platte auch geringer gehalten werden kann.

Ist das zumindest eine Federelemente mit einem weiteren elastisch verformbaren Material, insbesondere Metall, gebildet, so kann die Platte an den anatomischen Erfordernissen besonders vorteilhaft angepaßt werden, ohne daß das Erfordernis der hohen elastischen Eigenschaften, wie sie für die Federelemente erforderlich sind, bei der Materialauswahl der Platte berücksichtigt werden muß.

Besteht das zumindest eine Federelement aus Stahl, insbesondere Bandstahl, so kann das Gesamtgewicht der Stütze bei gleichzeitig hohen Rückstellkräften besonders gering gehalten werden. Weiters kann besonders vorteilhaft ein Kunststoffmaterial ohne Faserverstärkung eingesetzt werden, womit eine besonders gute Recyclierung eines thermoplastischen Kunststoffes gewährleistet ist, wobei weiters die Rückstellkräfte auch bei besonders tiefen und besonders hohen Temperaturen, wie sie beispielsweise in Kraftfahrzeugen vorliegen können, gewährleistet sind.

Weist das zumindest eine Federelement Enden auf, welche in Aufnahmen der Platte, insbesondere nicht meterialschlüssig, eingreifen, so ist der Längenänderung bei der Krümmung von Platten od. dgl. bezüglich Außenseite und Innenseite der Krümmung besonders einfach und wirksam Rechnung getragen, womit durch diese Federelemente nicht zusätzlich zur Biegung lokale Kräfte eingebracht werden, die zur vorzeitigen Zerstörung führen.

Ist das zumindest eine Federelement mit zumindest einer Führung der Platte, welche zwischen den Enden des zumindest einen Federelementes vorgesehen ist, an dieser geführt, so wird die Platte nicht nur in ihren Endbereichen von den Federelementen gestützt, sondern auch im Bereich der Führung gestützt, so daß eine zusätzliche Stütze und Krafteinleitung der Platte im Bereich der Führung gewährleistet ist.

Ist das zumindest eine Federelement an der Innenseite der Platte, bezogen auf die gekrümmte Platte, angeordnet, so kann die Platte als solche den anatomischen Erfordernissen besonders einfach angepaßt werden, wobei die konstruktiven Erfordernisse für die Anordnung des oder der Federelemente(s) nicht behindernd wirken.

Ist das zumindest eine Federelement symmetrisch, bezogen auf die Platte, angeordnet, so wird der an sich bekannten symmetrischen Ausbildung eines Körpers des Benützers besonders einfach Rechnung getragen.

Weist die Platte einen Grundkörper auf, von welchem, insbesondere beidseitig, quer zur Bewegungsrichtung der zueinander bewegenden Bereiche Fortsätze abragen, so kann einerseits bei materialsparender Ausbildung der Platte über die Fortsätze eine entsprechende Stützung des Körpers des Benützers erfolgen, so daß beispielsweise den unterschiedlichen Bereichen, wie Rippen-, Nieren- und Lendenbereich, besonders einfach Rechnung getragen werden kann.

Ist die Platte quer zur Bewegungsrichtung der zueinander bewegbaren Bereiche gekrümmt ausgebildet, so wird eine selbsttätige Positionierung des Körpers des Benützers in der Platte erreicht.

Sind die Fortsätze aus der Ebene des Grundkörpers gekrümmt und zur Außenseite der Platte, bezogen auf die gekrümmte Platte, geneigt, so kann eine besonders geringe Krafteinwirkung der Platte auf den Körper des Benützers durch die Fortsätze eintreten, so daß eine der Druckempfindlichkeit entsprechende Federcharakteristik der Stütze gewährleistet ist und eine laterale Stützung, z. B. im Bereich der Nieren, gegeben sein kann.

Ist bei der Ausbildung als Lordosenstütze die Wandstärke der Platte von oben nach unten im wesentlichen, insbesondere auf die Hälfte, vorzugsweise auf ein Drittel, abnehmend ausgebildet, so ist der asymmetrischen Ausbildung einer Lordosenstütze auf besonders einfache Weise Rechnung getragen.

Ist die Materialstärke in den beiden Endbereichen, bezogen auf die Bewegungsrichtung der beiden zueinander bewegenden Bereiche, zunehmend ausgebildet, so kann auch bei einer hohen Anzahl von Lastwechseln eine störungsfreie Einleitung der Kräfte durch Zugelemente od. dgl., wie sie für die Zueinanderbewegung der Bereiche erforderlich sind, besonders einfach gewährleistet sein.

Weist zumindest ein Fortsatz eine quer zur Bewegungsrichtung ihrer beiden zueinander bewegenden Bereiche eine zur Plattenaußenseite abnehmende Wandstärke auf, so ist eine nach außen immer geringer werdende Rückstellkraft und damit Druckbelastung des Benützers gewährleistet.

Sind integral mit der Platte ausgebildete Aufnahmen in den Endbereichen für die Kraftverteilungselemente zum Angriff eines Zugelementes, insbesondere Bowdenzuges, vorgesehen, so ist eine Krafteinleitung mit besonders geringen Kraftspitzen und damit vorzeitiger Zerstörung der Platte ermöglicht.

Ist am einen Endbereich, insbesondere dem unteren Endbereich, eine teilzylinderförmige Aufnahme, deren Zylindermantel mehr als 180° einschließt, quer, insbesondere normal, zur Bewegungsrichtung der zueinander bewegbaren Bereiche vorgesehen, so kann durch Einrasten eines zumindest teilweise zylindrischen Montageteiles eine besonders einfache Positionierung der Stütze, beispielsweise in einer Länge od. dgl., erfolgen, wie es beispielsweise zur Verschiebung der Stütze in Richtung parallel zur Bewegungsrichtung der beiden Endbereiche, um die Höhenlage der Stütze zu ändern, erforderlich sein kann.

Weist die Platte Ausnchmungen, insbesondere im Grundkörper, auf, so kann dadurch einerseits die Elastizität der Platte beeinflußt werden, und gleichzeitig kann durch die Ausnehmungen ein Luftaustausch, insbesondere zum Ausgleich der Luftfeuchtigkeit, erfolgen. Weiters kann eine Anpassung an bestimmte Polsterungen und Schaumstoffstärken erfolgen.

Sind die Ausnehmungen, bezogen quer zur Bewegungsrichtung der Bereiche, im Bereich der Fortsätze angeordnet, so ist der versteifenden Wirkung der Fortsätze durch die Abnahme der Elastizität durch die Ausnehmungen besonders einfach Rechnung getragen.

Im folgenden wird die Erfindung anhand der Zeichnungen näher erläutert.

Es zeigen:
Fig. 1 einen Autositz im Querschnitt,
Fig. 2 eine Lordosenstütze in Draufsicht von der Außenseite, bezogen auf die gekrümmte Stütze,
Fig. 3 eine Draufsicht auf eine Lordosenstütze von der Innenseite, bezogen auf die gekrümmte Stütze,
die Fig. 4, 5, 6 Schnitte entsprechend der Linien IV - IV, V - V, VI - VI von Fig. 2,
Fig. 7 einen Schnitt entsprechend der Linie VII - VII von Fig. 3,
Fig. 8 einen Schnitt durch die gekrümmte Stütze entsprechend IV - IV gemäß Fig. 2 und
Fig. 9 eine Verteilung der Wandstärken der Lordosenstütze gemäß Fig. 2 in Draufsicht.

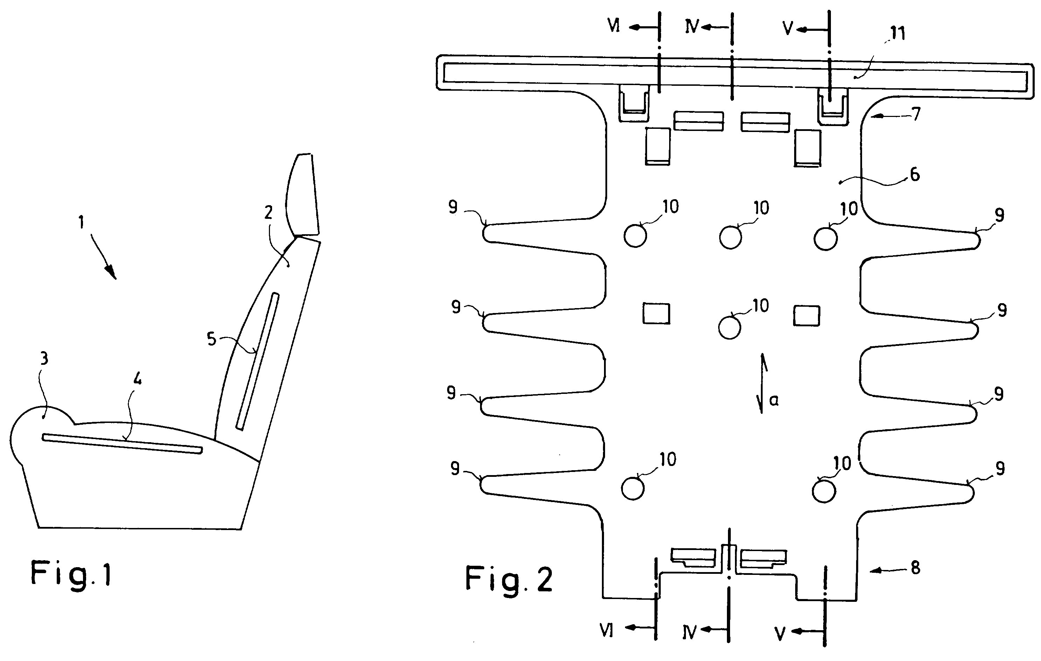

Der in Fig. 1 dargestellte Autositz 1 weist eine Lehne 2 und einen Sitzteil 3 auf. Sowohl in der Lehne als auch im Sitzteil sind anatomisch formbare Stützen 4 und 5 angeordnet. Die Stützen sind mit dem Rahmen und der Federung des Autositzes verbunden und jeweils von einer nicht dargestellten Schichte aus Polstermaterial, z. B. Polyurethanschaum, umgeben. Durch einen ebenfalls nicht dargestellten Bowdenzug können die Stützen 4 und 5 entsprechend den anatomischen Anforderungen des Benützers gekrümmt werden, so daß die Wirbelsäule entsprechend ihrer Form mit einer asymmetrischen Krümmung der Stütze abgestützt werden kann. Bei der im Sitzteil vorgesehenen Stütze besteht ebenfalls die Möglichkeit, die Sitzfläche derart in ihrer Auflagefläche zu verändern, daß eine gleichzeitige Stütze der Oberschenkel des Benützers gegeben ist. womit auch teilweise die Sitzhöhe einstellbar wird. Bei Auffahrunfällen wird ein Herausgleiten aus den Sitzgurten verhinderbar.

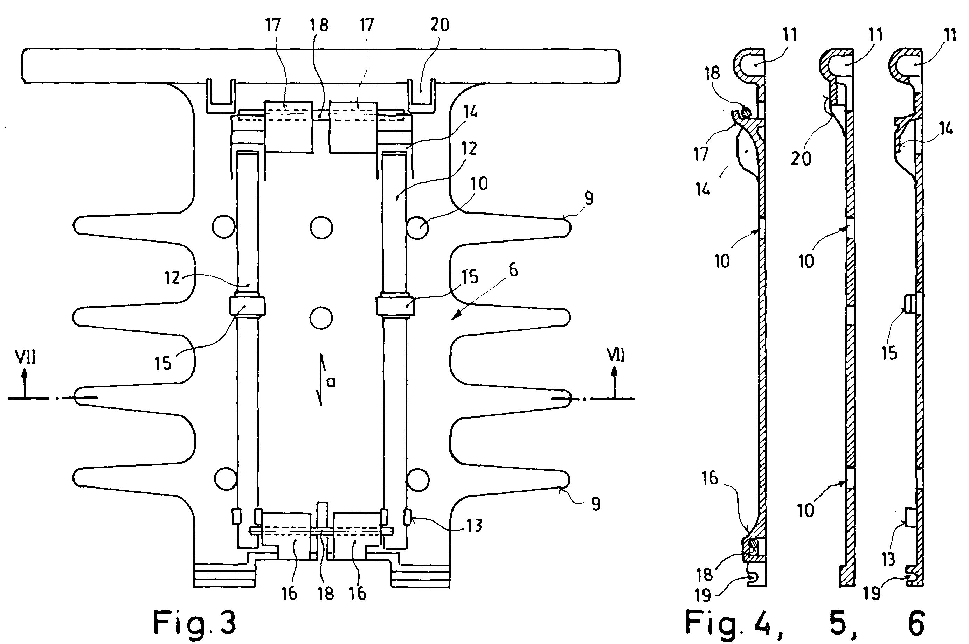

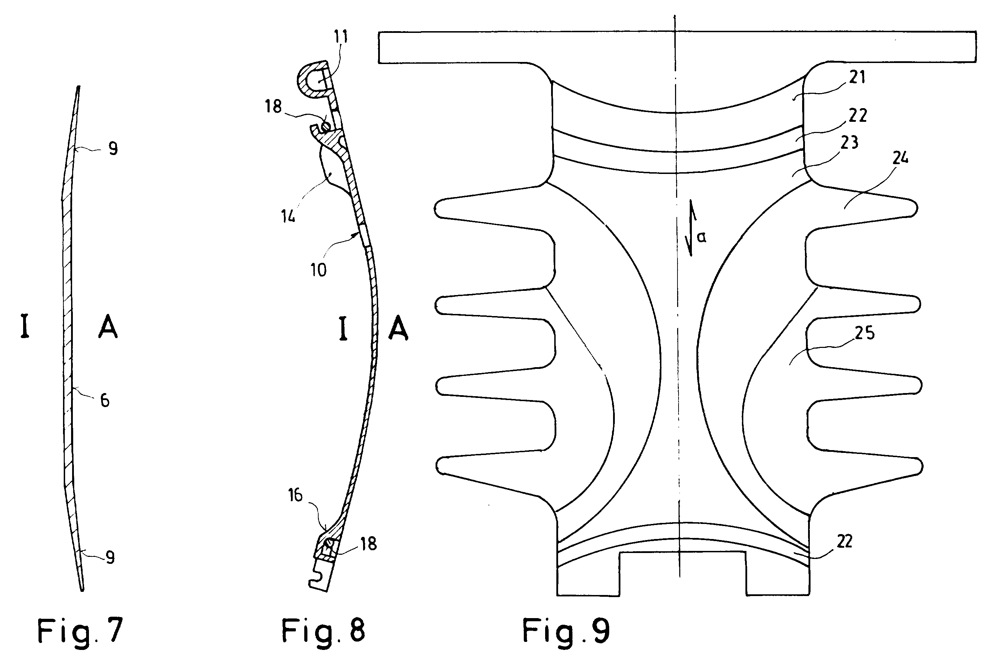

Die in Fig. 2 dargestellte Lordosenstütze für eine Lehne eines Autositzes weist einen Grundkörper 6 auf, dessen oberer Bereich 7 und unterer Bereich 8 in Bewegungsrichtung a zueinander und voneinander bewegbar sind. Vom Grundkörper 6 ragen Fortsätze 9 quer zur Bewegungsrichtung a orientiert ab. Die Fortsätze 9 sind, wie besonders deutlich aus Fig. 7 ersichtlich, aus der Ebene des Grundkörpers 6 in Richtung nach außen A, bezogen auf die gekrümmte Platte, geneigt. Im Bereich der Fortsätze 9, bezogen quer auf die Bewegungsrichtung a, sind im Grundkörper kreisrunde Ausnehmungen 10 vorgesehen. Im oberen Bereich 7 ist eine Aufnahme 11 mit teilzylindrischem Querschnitt vorgesehen, welche zur Befestigung der Stütze am Rahmen des Sitzes oder zum Überhängen der Stütze an einem Rückenteil eines Sitzmöbels dient.

In Fig. 3 ist die Lordoscnstützc an der Innenseite, bezogen auf die gekrümmte Stütze, dargestellt. Es sind symmetrisch, bezogen auf die Längserstreckung, zwei Federelemente 12 aus Bandstahl angeordnet. Zwischen den Federelementen kann ein leichteres Einfedern stattfinden, womit der Druckempfindlichkeit der Wirbelsäule Rechnung getragen ist. Diese Federelemente können als Längsrippen am Grundkörper der Lordosenstütze ausgebildet sein. Die Federelemente sind in Aufnahmen 13 und 14 in ihrem Endbereich angeordnet, wobei eine Bewegung in Bewegungsrichtung a als auch normal zum Grundkörper 6 gegeben ist. Zwischen den beiden Aufnahmen 13 und 14 ist eine Führung 15 für die Federelemente gegeben, wobei die Federelemente ebenfalls mit Spiel in demselben angeordnet sind. Bei Krümmung der Stütze erfolgt somit eine Krafteinleitung sowohl in den Aufnahmen 13 und 14 als auch in der Führung 15. Durch das Spiel in Bewegungsrichtung a wird der Kontraktion der Innenseite besonders einfach Rechnung getragen, wobei gleichzeitig jegliche materialschlüssige Verbindung der Federelemente mit der aus Kunststoff aufgebauten Stütze vermieden ist. Als Kunststoff für die Stütze können Polyamide, Polyimide, Polyester u. dgl. verwendet werden. Bevorzugt kommen Thermoplaste zum Einsatz, da dieselben besonders einfach recycliert werden können, wobei eine Faserverstärkung der Kunststoffe, falls aus Gründen der elastischen Eigenschaften erforderlich, ebenfalls geführt werden kann. Damit sind Materialien im Einsatz, welche eine analoge Wärmeleitfähigkeit wie das Polstermaterial aufweisen. An den beiden Endbereichen des Grundkörpers sind Aufnahmen 16, 17 vorgesehen, in welchen Stahlrundstäbe 18, die als Kraftverteilungselemente dienen, gelagert sind. An diese Kraftverteilungselemente greift ein Zugelement, u. zw. ein Bowdenzug, an, welcher aus Gründen der Übersicht nicht dargestellt ist.

Bei dem in Fig. 4 dargestellten Schnitt ist besonders deutlich die Anordnung der Kraftverteilungselemente 18 in den Aufnahmen 16, 17 ersichtlich. Im unteren Bereich ist eine weitere teilzylinderförmige Ausnehmung 19 zur Aufnahme eines Rundstabes (nicht dargestellt) vorgesehen, wodurch die Montage der Lordosenstütze im Sitz besonders einfach durchgeführt werden kann, da die Ausnehmung mehr als 180° umfaßt, so daß auf Grund des elastisch federnden Materials ein Rundstab in dieselbe eingedrückt werden kann.

Bei dem in Fig. 5 dargestellten Schnitt ist ein Schenkel 20, der ebenfalls in Fig. 3 ersichtlich ist, dargestellt, welcher auch zur Befestigung der Lordosenstütze am Sitz dienen kann.

Dem Schnitt gemäß Fig. 6, welcher im Bereich der Aufnahmen bzw. Führung für die Federelemente gelegt ist, ist besonders deutlich die Anordnung dieser Aufnahmen 13, 14 sowie der Führung 15 zu entnehmen. Besonders deutlich kann bei der Aufnahme 14 erkannt werden, daß ein Federelement in Form eines Bandstahles mit Spiel anordenbar ist.

Bei dem in Fig. 8 dargestellten Schnitt, der der Fig. 4 entspricht, ist die Lordosenstütze gekrümmt dargestellt, wobei besonders deutlich ersichtlich ist, daß an der Außenseite A der Krümmung eine im wesentlichen ohne Vorsprünge versehene Fläche vorliegt, wohingegen an der Innenseite I sämtliche Aufnahmen, Führungen u. dgl. vorgesehen sind.

Bei der in Fig. 9 schematisch dargestellten Ansicht der Lordosenstütze sind Bereiche gleicher Wandstärke abgebildet. Der Bereich 21 weist eine Wandstärke von 2,4 mm, die Bereiche 22 eine Wandstärke von 2,2 mm, der Bereich 23 von 2,0 mm, der Bereich 24 1,6 mm und der Bereich 25 von 1,2 mm auf. Die Wandstärke nimmt somit sowohl in Bewegungsrichtung a als auch quer hiezu ab, wobei die beiden Endbereiche wieder in der Wandstärke eine größere Dicke aufweisen. Durch diese spezifische Ausbildung ist es ermöglicht, daß einerseits die Lordosenstütze eine asymmetrische Krümmung aufweisen kann, die den anatomischen Erfordernissen besonders günstig Rechnung trägt, wobei weiters die Randbereiche auf Grund ihrer geringeren Wandstärke besonders nachgiebig ausgestaltet werden können.

## Patentansprüche

1. Anatomisch formbare Stütze (4, 5), insbesondere Lordosenstütze, für Liege- und/oder Sitzmöbel, mit zumindest einer Platte (6), welche mit einem elastisch verformbaren Material, insbesondere Kunststoff, aufgebaut ist welche weiters durch Zueinanderbewegen zumindest zweier Bereiche der Platte (6), insbesondere Endbereiche (7, 8), mit einstellbarer, gegebenenfalls unterstützungsloser, Scheitelhöhe krümmbar ausgebildet ist, und die Platte (6) in Richtung der beiden zueinander bewegbaren Bereiche (7, 8) mit variierender Wandstärke ausgebildet ist, **dadurch gekennzeichnet**, daß die Wandstärke der Platte (6) zusätzlich quer zur Bewegungsrichtung (a) der beiden zueinander bewegbaren Bereiche (7. 8) in ihrer Dicke variiert und daß zumindest ein, insbesondere zwei, Federelement(e) (12) an der Platte (6) vorgesehen ist, welche(s) beim Zueinanderbewegen der Bereiche (7, 8) gespannt werden wird, wobei die Platte (6) einen Grundkörper aufweist, von welchem, insbesondere beidseitig, quer zur Bewegungsrichtung (a) der zueinander bewegbaren Bereiche (18) Fortsätze (9) abragen.

2. Anatomisch formbare Stütze, insbesondere Lordosenstütze, nach Anspruch 1, **dadurch gekennzeichnet**, daß das zumindest eine Federelement (12) mit Material Verstärkungen der Platte (6) gebildet ist, die in Bewegungsrichtung (a) der beiden zueinander bewegbaren Bereiche, insbesondere parallel hiezu, verläuft.

3. Anatomisch formbare Stütze, insbesondere Lordosenstütze, nach Anspruch 1 oder 2, **dadurch gekennzeichnet**, daß das zumindest eine Federelement (12) mit einem weiteren elastisch verformbaren Material, insbesondere Metall, gebildet ist.

4. Anatomisch formbare Stütze, insbesondere Lordosenstütze, nach Anspruch 3, **dadurch gekennzeichnet**, daß das zumindest eine Federelement (12) aus Stahl, insbesondere Bandstahl, besteht.

5. Anatomisch formbare Stütze, insbesondere Lordosenstütze, nach einem der Ansprüche 1 bis 4, **dadurch gekennzeichnet,** daß das zumindest eine Federelement (12) Enden aufweist, welche in Aufnahmen (13, 14) der Platte (6), insbesondere nicht materialschlüssig, eingreifen.

6. Anatomisch formbare Stütze, insbesondere Lordosenstütze, nach einem der Ansprüche 1 bis 5, **dadurch gekennzeichnet**, daß das zumindest eine Federelement (12) mit zumindest einer Führung (15) der Platte (6), welche zwischen den Enden des zumindest einen Federelementes (12) vorgesehen ist, an dieser geführt ist.

7. Anatomisch formbare Stütze, insbesondere Lordosenstütze, nach einem der Ansprüche 1 bis 6, **dadurch gekennzeichnet**, daß das zumindest eine Federelement (12) an der Innenseite (1) der Platte (6), bezogen auf die gekrümmte Platte, angeordnet ist.

8. Anatomisch formbare Stütze, insbesondere Lordosenstütze, nach einem der Ansprüche 1 bis 7, **dadurch gekennzeichnet**, daß das zumindest eine Federelement (12) symmetrisch, bezogen auf die Platte (6), angeordnet ist.

9. Anatomisch formbare Stütze, insbesondere Lordosenstütze, nach einem der Ansprüche 1 bis 8, dadurch gekennzeichnet, daß die Platte (6) quer zur Bewegungsrichtung (a) der zueinander bewegbaren Bereiche (7, 8) gekrümmt ausgebildet ist (Fig. 7).

10. Anatomisch formbare Stütze, insbesondere Lordosenstütze, nach Anspruch 8 oder 9, **dadurch gekennzeichnet**, daß die Fortsätze (9) aus der Ebene des Grundkörpers gekrümmt sind, und zur Außenseite (A) der Platte (6), bezogen auf die gekrümmte Platte (6), geneigt ist (Fig. 7).

11. Anatomisch formbare Stütze, insbesondere Lordosenstütze, nach einem der Ansprüche 1 bis 10, **dadurch gekennzeichnet,** daß bei Ausbildung als Lordosenstütze die Wandstärke der Platte (6) von oben nach unten im wesentlichen, insbesondere auf die Hälfte, vorzugsweise auf ein Drittel, abnehmend ausgebildet ist.

12. Anatomisch formbare Stütze, insbesondere Lordosenstütze, nach einem der Ansprüche 1 bis 11, **dadurch gekennzeichnet**, daß die Materialstärke in den beiden Endbereichen (6, 7), bezogen auf die Bewegungsrichtung (a), der beiden zueinander bewegbaren Bereiche (7, 8) zunehmend ausgebildet sind.

13. Anatomisch formbare Stütze, insbesondere Lordosenstütze, nach einem der Ansprüche 9 bis 12, **dadurch gekennzeichnet**, daß zumindest ein Fortsatz (9) eine quer zur Bewegungsrichtung (a) der beiden zueinander bewegbaren Bereiche (7, 8) eine zur Plattenaußenseite (A) abnehmende Wandstärke aufweist.

14. Anatomisch formbare Stütze, insbesondere Lordosenstütze, nach einem der Ansprüche 1 bis 13, **dadurch gekennzeichnet,** daß integral mit Platte ausgebildete Aufnahmen (16, 17) in den Endbereichen für Kraftverteilungselemente (18) zum Angriff eines Zugelementes, insbesondere Bowdenzuges, vorgesehen sind.

15. Anatomisch formbare Stütze, **insbesondere Lordosenstütze**, nach einem der Ansprüche 1 bis 14, dadurch gekennzeichnet, daß an einem Endbcreich (7. 8), insbesondere dem unteren Endbereich (8), eine teilzylinderförmige Aufnahme (16, 17), deren Zylindermantel mehr als 180° einschließt, quer, insbesondere normal, zur Bewegungsrichtung (a) der zueinander bewegbaren Bereiche (7, 8) vorgesehen ist.

16. Anatomisch formbare Stütze, insbesondere Lordosenstütze, nach einem der Ansprüche 1 bis 15, **dadurch gekennzeichnet**, daß die Platte Ausnchmungen (10), insbesondere im Grundkörper, aufweist.

17. Anatomisch formbare Stütze, insbesondere Lordosenstütze, nach Anspruch 16, **dadurch gekennzeichnet**, daß die Ausnehmungen, bezogen auf die quer zur Bewegungsrichtung (a) der zueinander bewegenden Bereiche, im Bereich der Fortsätze (9) angeordnet sind.

## Claims

1. Anatomically formable support (4, 5), in particular lumbar support, for lying and/or sitting furniture, with at least one plate (6) which is constructed of an elastically deformable material, in particular plastic, which in addition is made so that it can be curved by moving at least two areas of the plate (6), in particular end areas (7, 8), towards one another with an adjustable, if necessary unsupported, vertex, and the plate (6) is made with varying wall thickness in the direction of the two areas (7, 8) movable towards one another,
characterised in that the wall thickness of the plate (6) additionally varies in its thickness transversely to the direction of movement (a) of the two areas (7, 8) movable towards one another and in that at least one, in particular two, spring elements (12) are provided on the plate (6), which element or elements are tensioned when the areas (7, 8) are moved towards one another, the plate (6) exhibiting a base body from which extensions (9) project, in particular on both sides, transversely to the direction of movement (a) of the areas (18) movable towards one another.

2. Anatomically formable support, in particular lumbar support, according to claim 1, characterised in that the at least one spring element (12) is formed with material reinforcements of the plate (6) which run in the direction of movement (a) of the two areas movable towards one another, in particular parallel thereto.

3. Anatomically formable support, in particular lumbar support, according to claim 1 or 2, characterised in that the at least one spring element (12) is formed with a further elastically deformable material, in particular metal.

4. Anatomically formable support, in particular lumbar support, according to claim 3, characterised in that the at least one spring element (12) is made of steel, in particular strip steel.

5. Anatomically formable support, in particular lumbar support, according to one of claims 1 to 4, characterised in that the at least one spring element (12) exhibits ends which engage in receptacles (13, 14) of the plate (6), in particular not in a material locking manner.

6. Anatomically formable support, in particular lumbar support, according to one of claims 1 to 5, characterised in that the at least one spring element (12) is guided on the plate (6) with at least one guide (15) which is provided between the ends of the at least one spring element (12).

7. Anatomically formable support, in particular lumbar support, according to one of claims 1 to 6, characterised in that the at least one spring element (12) is disposed on the inside (I) of the plate (6), in relation to the curved plate.

8. Anatomically formable support, in particular lumbar support, according to one of claims 1 to 7, characterised in that the at least one spring element (12) is disposed symmetrically, in relation to the plate (6).

9. Anatomically formable support, in particular lumbar support, according to one of claims 1 to 8, characterised in that the plate (6) is made curved transversely to the direction of movement (a) of the areas (7, 8) movable towards one another (fig. 7).

10. Anatomically formable support, in particular lumbar support, according to claim 8 or 9, characterised in that the extensions (9) are curved out of the plane of the base body and are inclined towards the outside (A) of the plate (6), in relation to the curved plate (6) (fig. 7).

11. Anatomically formable support, in particular lumbar support, according to one of claims 1 to 10, characterised in that when embodied as a lumbar support, the wall thickness of the plate (6) essentially decreases from the top downwards, in particular to half, preferably to a third.

12. Anatomically formable support, in particular lumbar support, according to one of claims 1 to 11, characterised in that the material thickness in the two end areas (6, 7) increases in relation to the direction of movement (a) of the two areas (7, 8) movable towards one another.

13. Anatomically formable support, in particular lumbar support, according to one of claims 9 to 12, characterised in that at least one extension (9) exhibits a wall thickness which decreases towards the outside (A) of the plate transversely to the direction of movement (a) of the two areas (7, 8) movable towards one another.

14. Anatomically formable support, in particular lumbar support, according to one of claims 1 to 13, characterised in that receptacles (16, 17) formed integral with the plate are provided in the end areas for force distributing elements (18) for the action of a traction element, in particular Bowden cable.

15. Anatomically formable support, in particular lumbar support, according to one of claims 1 to 14, characterised in that a partially cylindrical receptacle (16, 17) whose cylindrical casing encloses more that 180°, is provided in one end area (7, 8), in particular the lower end area (8), transversely, in particular at right angles, to the direction of movement (a) of the areas (7, 8) movable towards one another.

16. Anatomically formable support, in particular lumbar support, according to one of claims 1 to 15, characterised in that the plate exhibits cut-outs (10), in particular in the base body.

17. Anatomically formable support, in particular lumbar support, according to claim 16, characterised in that the cut-outs are disposed transversely to the direction of movement (a) of the areas moving towards one another in the area of the extensions (9).

## Revendications

1. Appui (4, 5) adaptable en fonction de l'anatomie, en particulier appui lombaire, pour articles de couchage et/ou pour sièges, avec au moins une plaque (6), en un matériau déformable élastiquement, en particulier en matière plastique, qui peut être cintrée avec une hauteur au sommet réglable, le cas échéant en annulant l'effet d'appui, par déplacement en direction l'une de l'autre d'au moins deux parties de la plaque (6), en particulier de parties d'extrémité (7, 8) et présente une épaisseur de paroi qui varie en direction des deux parties (7, 8) déplaçables en direction l'une de l'autre, caractérisé par le fait que l'épaisseur de la plaque (6) varie en outre dans la direction transversale à la direction de déplacement (a) des deux parties (7, 8) déplaçables en direction l'une de l'autre et par le fait qu'il est prévu, sur la plaque (6), au moins un, en particulier deux, élément(s) élastique(s) (12) qui est(sont) mis en tension lors du déplacement en direction l'une de l'autre des parties (7, 8), la plaque (6) comportant un corps de base sur lequel deux prolongements (9) font saillie, en particulier de chaque côté, transversalement à la direction de déplacement (a) des parties (18) déplaçables en direction l'une de l'autre.

2. Appui adaptable en fonction de l'anatomie, en particulier appui lombaire, selon la revendication 1, caractérisé par le fait que l'élément élastique (12) au nombre d'au moins un est formé par des surépaisseurs de la plaque (6) qui s'étendent dans la direction de déplacement (a) des deux parties déplaçables en direction l'une de l'autre, en particulier parallèlement à celle-ci.

3. Appui adaptable en fonction de l'anatomie, en particulier appui lombaire, selon la revendication 1 ou 2, caractérisé par le fait que l'élément élastique (12) au nombre d'au moins un est formé d'un autre matériau déformable élastiquement, en particulier est en métal.

4. Appui adaptable en fonction de l'anatomie, en particulier appui lombaire, selon la revendication 3, caractérisé par le fait que l'élément élastique (12) au nombre d'au moins un est en acier, en particulier est formé d'un feuillard d'acier.

5. Appui adaptable en fonction de l'anatomie, en particulier appui lombaire, selon une des revendications 1 à 4, caractérisé par le fait que l'élément élastique (12) au nombre d'au moins un comporte des extrémités qui s'engagent dans des logements (13, 14) de la plaque (6), en particulier sans liaison par matière.

6. Appui adaptable en fonction de l'anatomie, en particulier appui lombaire, selon une des revendications 1 à 5, caractérisé par le fait que l'élément élastique (12) au nombre d'au moins un est guidé sur la plaque( 6 )par au moins un guide (15) prévu sur celle-ci, entre les extrémités de l'élément élastique (12) au nombre d'au moins un.

7. Appui adaptable en fonction de l'anatomie, en particulier appui lombaire, selon une des revendications 1 à 6, caractérisé par le fait que l'élément élastique (12) au nombre d'au moins un est disposé sur la face intérieure (1) de la plaque (6), rapporté à la plaque cintrée.

8. Appui adaptable en fonction de l'anatomie, en particulier appui lombaire, selon une des revendications 1 à 7, caractérisé par le fait que l'élément élastique (12) au nombre d'au moins un est disposé de manière symétrique par rapport à la plaque (6).

9. Appui adaptable en fonction de l'anatomie, en particulier appui lombaire, selon une des revendications 1 à 8, caractérisé par le fait que la plaque (6) est cintrée dans la direction transversale à la direction de déplacement (a) des parties (7, 8) déplaçables en direction l'une de l'autre.

10. Appui adaptable en fonction de l'anatomie, en particulier appui lombaire, selon la revendication 8 ou 9, caractérisé par le fait que les prolongements (9) sont courbés à partir du plan du corps de base et sont inclinés en direction de la face extérieure (A) de la plaque (6) par rapport ) la plaque cintrée (6) (figure 7).

11. Appui adaptable en fonction de l'anatomie, en particulier appui lombaire, selon une des revendications 1 à 10, caractérisé par le fait que, pour un appui lombaire, l'épaisseur de la plaque diminue essentiellement du haut vers le bas, en particulier diminue de moitié, de préférence du tiers.

12. Appui adaptable en fonction de l'anatomie, en particulier appui lombaire, selon une des revendications 1 à 11, caractérisé par le fait que l'épaisseur de matériau croît dans les deux parties d'extrémité (6, 7), rapporté à la direction de déplacement (a) des deux parties (7, 8) déplaçables en direction l'une de l'autre.

13. Appui adaptable en fonction de l'anatomie, en particulier appui lombaire, selon une des revendications 9 à 12, caractérisé par le fait qu'au moins un prolongement (9) présente une épaisseur de paroi qui décroît en direction de la face extérieure (A) de la plaque, transversalement à la direction de déplacement (a) des deux parties (7, 8) déplaçables en direction l'une de l'autre.

14. Appui adaptable en fonction de l'anatomie, en particulier appui lombaire, selon une des revendications 1 à 13, caractérisé par le fait que des logements (16, 17) formant partie intégrante de la plaque sont prévus dans les parties d'extrémité pour des éléments de répartition des efforts (18) pour l'action d'un organe de traction, par exemple d'un mécanisme à câble de Bowden.

15. Appui adaptable en fonction de l'anatomie, en particulier appui lombaire, selon une des revendications 1 à 14, caractérisé par le fait qu'il est prévu sur une partie d'extrémité (7, 8), en particulier sur la partie d'extrémité inférieure (8), un logement en forme de cylindre partiel (16, 17), dont l'enveloppe couvre un angle supérieur à 180° et qui s'étend transversalement, en particulier perpendiculairement à la direction de déplacement (a) des parties (7, 8) déplaçables en direction l'une de l'autre.

16. Appui adaptable en fonction de l'anatomie, en particulier appui lombaire, selon une des revendications 1 à 15, caractérisé par le fait que la plaque comporte des évidements (10), en particulier dans le corps de base.

17. Appui adaptable en fonction de l'anatomie, en particulier appui lombaire, selon la revendication 16, caractérisé par le fait que les évidements, transversalement à la direction de déplacement des parties déplaçables en direction l'une de l'autre, sont disposés dans la région des prolongements (9).
